# EUROPEAN PATENT SPECIFICATION

(11) **EP 3 664 928 B1**
(45) Date of publication and mention of the grant of the patent: **05.08.2026**
(21) Application number: 17771729.5
(22) Date of filing: 18.09.2017
(51) Int. Cl.: B01J 19/12, B22F 3/10, B23K 26/00, B29C 67/00, B29C 67/04, G02B 26/10, B23K 26/342

(54) **METHOD OF CALIBRATING AN APPARATUS FOR GENERATIVELY MANUFACTURING A THREE-DIMENSIONAL OBJECT**
VERFAHREN ZUR KALIBRIERUNG EINER VORRICHTUNG ZUR GENERATIVEN FERTIGUNG EINES DREIDIMENSIONALEN OBJEKTS
PROCÉDÉ D'ÉTALONNAGE D'UN APPAREIL DE FABRICATION GÉNÉRATIVE D'UN OBJET TRIDIMENSIONNEL

(43) Date of publication of application: 17.06.2020
(73) Proprietor: EOS GmbH Electro Optical Systems, 82152 Krailling (DE)
(72) Inventor: VILAMAA, Janne, 15550 Nastola (FI); KOTILA, Juha, 20540 Turku (FI); LEUTERER, Martin, 82140 Olching (DE)
(74) Representative: Prüfer & Partner mbB Patentanwälte · Rechtsanwälte
(86) International application number: PCT/EP2017/073516
(87) International publication number: WO 2019/052671

(56) References cited:
- WO-A1-2011/100978
- WO-A1-2016/119813
- WO-A1-2016/169784
- DE-A1- 102013 208 651
- US-A1- 2010 264 302

## Description

The present invention relates to a method of calibrating an apparatus for generatively manufacturing a three-dimensional object by applying and selectively solidifying a building material layer-by-layer.

Apparatuses and methods of that type are used for example for Rapid Prototyping, Rapid Tooling or Additive Manufacturing. An example of such a method is known as "Selective Laser Sintering" (SLS) or "Selective Laser Melting" (SLM). In that method, a thin layer of a powdery building material is applied repeatedly, and the building material in each layer is selectively solidified by selectively irradiating positions corresponding to a cross-section of the object to be manufactured by a laser beam.

Among others, apparatuses and methods of that type may be used for manufacturing anti-scatter grids (ASG). Such grids are for example constructed of a series of strips of lead. They may be used in radiographic devices in order to reduce the amount of radiation scatter reaching a radiation detector. For a proper operation, the grids have to be manufactured with a high accuracy.

In order to increase the accuracy of a laser sintering device, calibration methods are known in the art. By those methods, a difference between a current position and a desired position of the point of impingement of the laser beam on the building material layer is detected. Preferably, plural difference values are measured at different positions. From these difference values, correction data for the manufacturing process may be obtained. Using the correction data, the laser may then be controlled in such a way that the current position and the desired position match as accurately as possible or as required.

DE 199 18 613 A1 describes a calibration method using a calibration plate which includes a photosensitive film. The laser exposes alignment crosses on the photosensitive film which are subsequently compared with reference crosses mounted on the calibration plate.

DE 10 2013 208 651 A1 describes a calibration method wherein a test pattern is generated by the laser in a light-sensitive medium or in an applied powder layer. The test pattern is then compared with a reference pattern.

WO 2016/119813 A1 discloses a method of calibrating an apparatus for generating three dimensional objects in which a calibration pattern is used.

In order to manufacture high-quality and/or high-precision objects such as anti-scatter grids, it is desired to further improve the accuracy of such calibration methods.

The object of the present invention is to provide a method of calibrating an apparatus for generatively manufacturing a three-dimensional object, especially an anti-scatter grid, layer-by-layer with an increased accuracy and reliability.

The object is achieved by a calibration method according to claim 1, a production method according to claim 11, and a production device according to claim 12. Further developments of the invention are respectively specified in the dependent claims. The methods may be further developed by features of the device, which features are indicated in the description below or in the claims, or vice versa, or by the features of the other method, respectively.

It may be noted that the term "to calibrate" is used in a broader sense, i.e. not only in the sense of a comparison of measurement values delivered by a device under test with those of a calibration standard of known accuracy, but also in the sense of such above-mentioned comparison followed by a subsequent adjustment step based on that comparison of measurement values.

The calibration method according to the invention serves for calibrating a production device for generatively producing a three-dimensional object by selectively solidifying a building material, preferably a powder, layer by layer, prior to a build job in which the three-dimensional object is to be produced. The production device comprises an application device for applying a layer of the building material and a solidification device for selectively solidifying the applied layer at the positions corresponding to a cross section of the object to be produced. The production device is adapted and/or controlled to repeat the steps of applying and selectively solidifying until the object is completed. The calibration method comprises performing a dummy job, and, after the completion of the dummy job, controlling the solidification device to act upon at least one predetermined position, measuring at least one actual position onto which the solidification device really acts, determining a deviation between the at least one predetermined position and the at least one actual position, and generating calibration data for the production device based on the determined deviation. Performing a dummy job before the calibration makes it possible, for example, to increase the accuracy of the calibration and thus the accuracy of the object to be built later in a build job. The production of the dummy job has, amongst others, the effect of putting the production device virtually into a state of operation including, amongst others, that the production device has reached its operation temperature so that a stationary state of the production device like in full normal operation (i.e. the state of operation during the build job itself) is reached. This is considered by the inventors as one important reason why the accuracy of calibration can be optimized by means of the method according the invention.

According to claim 1, control data for performing the dummy job is derived from control data for performing the build job. This makes it possible, for example, to put the production device into the same operation mode during the calibration as during the build job.

According to claim 1, during the dummy job no three-dimensional object or a three-dimensional object different from the three-dimensional object to be produced in the build job is built, due to at least one of the following measures:
- performing the dummy job without building material or with reduced building material compared to the build job,
- adjusting operation of the solidification device such that it does not solidify the building material or solidifies the building material in a different way than during the build job. This makes it possible, for example, to perform the dummy job in various ways, which simulates very closely a "real" operation, e.g. the build job.

Preferably, the object to be produced is an object having an essentially constant cross section along its height, the object preferably being an anti-scatter grid. This makes it possible, for example, to manufacture those objects with an increased accuracy, bearing in mind that such objects, in particular anti-scatter grids require a very high level of precision. Thus, using the invention in this particular field of application (i.e. of production of such particular objects) can be considered particularly advantageous.

Preferably, the dummy job is executed until steady-state operating conditions of the production device are reached. A steady-state is an operating state of the device in which operating parameters such as for example temperature, pressure and so on have reached a stationary value and do not essentially change during the further operation. This makes it possible, for example, to compensate thermal effects during the calibration, thus further increasing the accuracy of the calibration.

Preferably, the solidification device is an irradiation device emitting a radiation suitable for solidifying the building material, preferably a laser source emitting a laser beam, and parameters, preferably also parameter values, of the radiation emitted during the dummy job are the same (or essentially the same) as those to be applied for the build job. In the sense of the present application, parameters are the physical properties used in the dummy job or build job. Parameters for the irradiation device may for example include an intensity of the radiation, a diameter of the impingement point of the radiation on the powder surface, a velocity of the movement of this impingement point across the powder surface and so on. Parameter values are the numerical values of these parameters used in the dummy job or build job. Parameter values for the irradiation device may for example include an intensity of 1 W/µm², a diameter of the impingement point of 10µm, a velocity of 1m/s and so on. This makes it possible, for example, to achieve the same temperature distribution on the optical elements during the dummy calibration as during the build job, thus further increasing the accuracy of the calibration.

Preferably, the dummy job is executed until components of the solidification device, in particular such components that generate and direct a solidification radiation, have reached a steady-state temperature. A steady-state temperature is a temperature during a steady-state operation of the device and does not essentially change during the further operation. This makes it possible, for example, to compensate thermal effects on the optical elements during the calibration, thus further increasing the accuracy of the calibration.

Preferably, components of the solidification device include one or more radiation source(s) and/or one or more scanner(s) and/or one or more mirror(s) and/or one or more lens(es). This makes it possible, for example, to bring those components into a steady-state operation during calibration, thus further increasing the accuracy of the calibration.

Preferably, a heater of the production device, preferably a radiation heater, is controlled to operate during the dummy job under the same conditions as under those of the build job. This makes it possible, for example, to allow for an influence of a heater during the calibration, thus further increasing the accuracy of the calibration.

Preferably, during the dummy job a gas flow is applied in the production device with the same or essentially the same parameters and parameter values that are to be used in the build job. This makes it possible, for example, to allow for an influence of a gas flow on the build job during the calibration, thus further increasing the accuracy of the calibration. Preferably, the parameters of the gas flow include a flow rate and/or a speed and/or a direction of the gas flow. This makes it possible, for example, to set the influence of a gas flow during the calibration to the same values during the calibration as during the build job, thus further increasing the accuracy of the calibration.

Preferably, the sequence of performing the dummy job and thereafter generating calibration data is repeatedly carried out for different geometries of the cross-sections of the object to be produced so that a plurality of sets of calibration data, each corresponding to a specific geometry of the cross sections of the object to be produced, is generated. This makes it possible, for example, to manufacture multiple types of objects, and to select a suitable set of calibration data corresponding to cross-sections of the object to be manufactured in order to increase the accuracy of different types of objects.

The production method according to the present invention serves for generatively producing a three-dimensional object by selectively solidifying a building material, preferably a powder, layer by layer, in a build job. The production method comprises the steps defined in claim 11. Such a production method makes it possible, for example, to increase the accuracy of the manufactured object during the production, i.e. the execution of the build job.

The production device according to the present invention serves for generatively producing a three-dimensional object by selectively solidifying a building material, preferably a powder, layer by layer. The production device comprises the features of claim 12. Such a production device makes it possible, for example, to increase the accuracy of an object manufactured on this device.

Further features and expediencies of the invention may be derived from the description of exemplary embodiments by means of the appended drawings.
- Fig. 1: is a schematic view, partially represented in section, of an apparatus for the production of a three-dimensional object layer-by-layer which is suitable for carrying out the present invention.
- Fig. 2: shows plan views of different examples of anti-scatter grids.
- Fig. 3: shows different examples of a section of the anti-scatter grid taken along a line A-A shown in Fig. 2a.

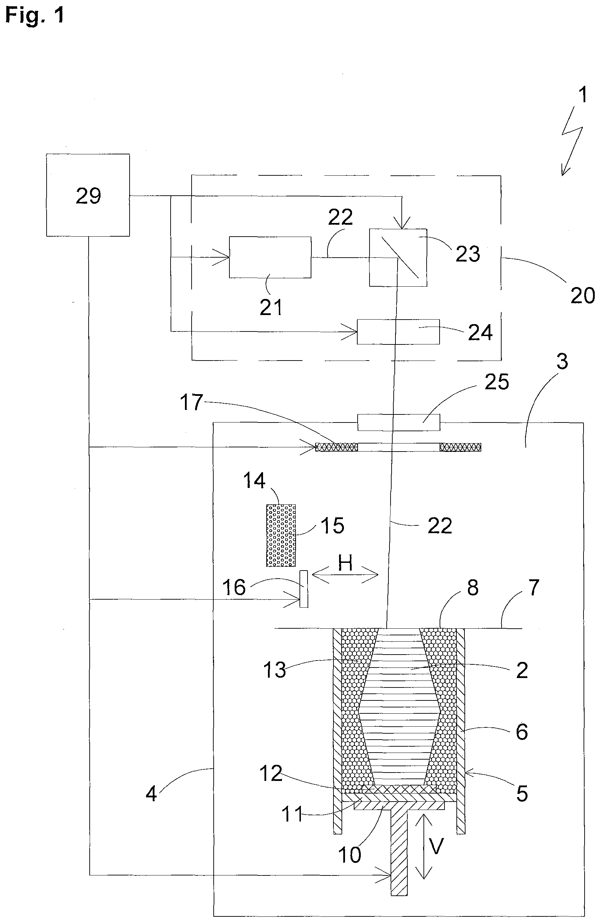

An exemplary embodiment of a device which is suitable for carrying out the present invention will be described hereunder with reference to Fig. 1. The device illustrated in Fig. 1 is a laser sintering or laser melting device 1. For building the object 2, the device 1 includes a processing chamber 3 having a chamber wall 4.

A container 5, which is open at the top and which has a container wall 6, is arranged in the processing chamber 3. The upper border of the container 5 defines a working plane 7, wherein the area within the opening at the top that can be used for building the object 2 is referred to as a build area 8.

A support 10, which is movable in a vertical direction V and onto which a base plate 11 is attached which closes the container 5 toward the bottom and thus forms the base of the latter, is disposed in the container 5. The base plate 11 may be a plate which is formed separately from the support 10 and which is attached to the support 10, or it may be formed so as to be integral with the support 10. Depending on the powder and process used, a building platform 12 on which the object 2 is build may also be attached as a building base to the base plate 11. However, the object 2 may also be constructed on the base plate 11 which then itself serves as the building base.

In Fig. 1 the object 2 which is to be formed in the container 5 on the construction platform 12 is illustrated below the working plane 7 in an intermediate state, having a plurality of solidified layers and being surrounded by remaining non-solidified building material 13.

The laser sintering device 1 further comprises a storage container 14 for a pulverulent building material 15 which is solidifiable by electromagnetic radiation, and an application device 16 (also called recoating device or recoater), which is movable in a horizontal direction H, for applying the building material 15 within the build area 8 are disposed in the processing chamber 3. Preferably, the application device 16 extends over the entire area to be applied in a direction traverse to its movement direction.

Optionally, a radiation heater 17 for heating the applied building material 15 is arranged in the processing chamber 3. An infrared lamp may for example be provided as a radiation heater.

The laser sintering device 1 further comprises an irradiation device 20 having a laser 21 which generates a laser beam 22 which is deflected by way of a deflecting device 23 and which is focused by way of a focusing device 24 via a coupling window 25 provided at the top of the processing chamber 3 in the chamber wall 4 onto the working plane 7.

The laser sintering device 1 further comprises a control unit 29 by way of which the individual component parts of the device are controlled in a coordinated manner for carrying out the building process. As an alternative, the control unit may partially or entirely be arranged outside of the device. The controller may include a CPU, the operation of which is controlled by a computer program (software). The computer program may be stored on a storage medium separate from the device, from where it may be loaded into the device, especially into the control unit.

In operation, the support 10 first is lowered by a predetermined height corresponding to the desired layer thickness. The application device is first moved to the storage container 14 from which it receives an amount of building material 15 which is sufficient for applying a layer. Then, it moves across the build area 8 where it applies a thin layer of the pulverulent building material 15 onto the building base or a previously applied powder layer. The application takes place at least over the total cross-section of the object 2 to be produced, preferably over the entire build area 8, i.e. the area delimited by the container wall 6. Optionally, the pulverulent building material 15 is heated by means of the radiation heater 17 to a working temperature.

Subsequently, the cross section of the object 2 to be produced is scanned by the laser beam 15 such that the pulverulent building material 12 is solidified at the locations corresponding to the cross section of the object 2 to be produced. The powder grains at those locations are partially or entirely melted by the energy introduced by the radiation so that after cooling, they are agglutinated to each other to form a solid body. These steps are repeated until the object has been finished and can be removed from the processing chamber 3.

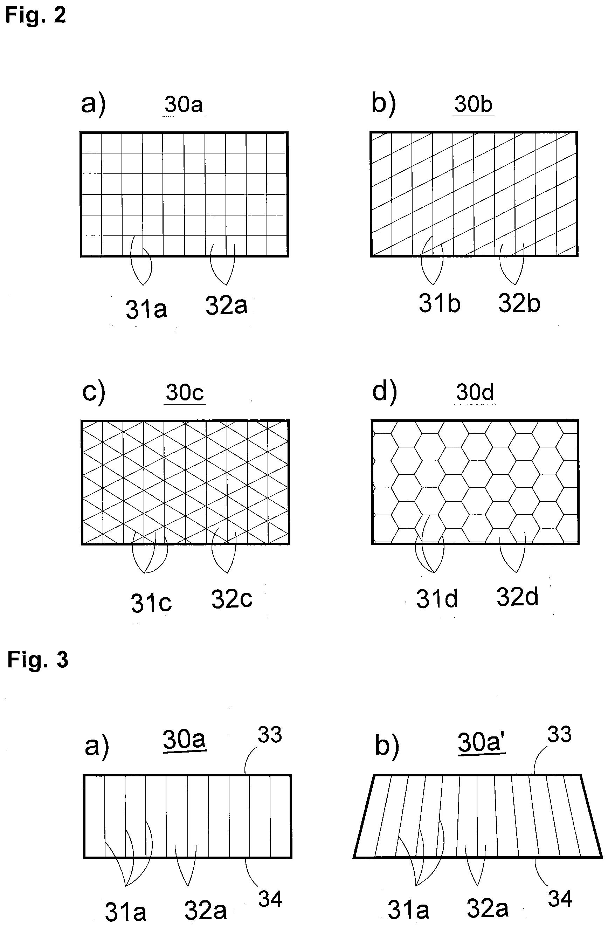

Fig. 2 shows plan views of different examples of anti-scatter grids. An anti-scatter grid generally consists of thin plates which are arranged in a pattern, leaving spaces 32 between them. In Fig. 2, the plates are arranged perpendicular to the drawing plane so that each plate appears as a line in the plan view. In the anti-scatter grid 30a shown in Fig. 2a, two sets of parallel grid plates 31a are arranged perpendicular to each other, thus resulting in a grid having rectangular spaces 32a between the grid plates 31a. In the anti-scatter grid 30b shown in Fig. 2b, the grid plates 31b include an angle different from 90°, thus resulting in a grid having rhomboid spaces 32b between the grid plates 31b. In the anti-scatter grid 30c shown in Fig. 2c, the grid plates 31c are arranged in a way that a grid having triangular spaces 32c between the grid plates 31c results. In the anti-scatter grid 30d shown in Fig. 2d, the grid plates 31d are arranged in a way that a grid having hexagonal spaces 32d between the grid plates 31d results.

Fig. 3 shows different examples of a section of the anti-scatter grid 30a, 30a' as shown in Fig. 2a. When the plates are exactly perpendicular to the drawing plane in Fig. 2a, a cross section as shown in Fig. 3a results wherein the grid plates 31a are parallel to each other in the passing direction of the radiation (direction perpendicular to the drawing plane in Fig. 2a). However, as shown in Fig. 3b, there are also anti-scatter grids 30a' in which the grid plates 31a slightly diverge from the radiation input side 33 (top in Fig. 3b) to the radiation output side 34 (bottom in Fig. 3b) in order to be adapted to a punctual radiation source.

Typical anti-scatter grids have wall thicknesses (thickness of the grid plates 31) in the range from 80 to 200 µm and wall distances (width of the spaces 32) in the order of 1 mm.

If such anti-scatter grids are manufactured by applying and selectively solidifying a building material layer-by-layer, as in the method and apparatus described above, they are preferably manufactured in a way that the building platform is in a plane parallel to the drawing plane in Fig. 2. In that way, the horizontal cross section of the object 2 to be manufactured is the same (for anti-scatter grids corresponding to Fig. 3a) or at least almost the same (for anti-scatter grids corresponding to Fig. 3b) in each of the layers.

Due to the small dimensions of typical anti-scatter grids, a calibration of a laser sintering device has to be very precise.

It has been found out that the accuracy of a calibration can be improved if, before the calibration, a dummy job is performed on the laser sintering device, according to the method of claim 1.

A dummy job for the purpose of the present invention is a job which is similar to a real building job, in which, however, no object is really built, or in which an object different from the object to be produced later in the build job is built. That may for example be achieved by performing the dummy job without supplying powder or with a reduced amount of powder compared to the build job, and/or by adjusting the operation of the irradiation device such that it does not solidify the building material or that it solidifies the building material in a different way than during the build job.

Performing the dummy job so that no object at all is built may for example be achieved by not supplying any building material at all. The laser beam may then act upon the building platform which is later used for the real build job or on a dummy platform that is replaced before the real build job is carried out. The laser is controlled in the same way, i.e. with the same or at least essentially the same parameter values as in the real build job. Alternatively, building material may be supplied, and the laser power and/or the diameter of the impingement point of the laser beam on the powder surface (which may, for example, be changed by defocusing the laser beam) and/or its velocity across the powder surface may be set to values so that the building material is not solidified. The parameter values may even be the same as during the build job if a building material is used the melting point of which is high enough in order not to be melted by the laser. Alternatively, the laser beam may, after passing through all the optical elements in the same way as during the build job, be diverted to a beam trap by which the energy is absorbed.

Preferably, most or all of the operating components of the laser sintering device, such as the application device, the laser, scanners, mirrors, lenses, the radiation heater and so on are activated and brought into their normal operating conditions during the dummy job. Preferably, also a gas flow, especially an inert gas flow, is applied to the processing chamber during the dummy job with the same parameters such as flow rate and/or speed and/or direction of the gas flow and the same parameter values that are to be used in the real build job.

Further preferably, the dummy job is executed until steady-state operating conditions of the laser sintering device are reached. Especially, the dummy job is executed until components of the irradiation device, such as laser, scanners, mirrors, lenses, and the coupling window have reached a steady-state temperature.

Performing such a dummy job has the effect that the temperature and its distribution within the laser sintering device is at least nearly the same as under actual production conditions. A calibration performed in that state of the laser sintering device therefore also takes into account deviations caused by thermal effects or the like. Therefore, calibration data derived from the calibration can correct possible deviations more accurately than in a case where a calibration is made without previously bringing the machine into a state corresponding to the real build job.

The accuracy of a calibration can further be improved if the dummy job is performed by making the laser scan the platform or powder surface in the same pattern as in the real build job.

This is achieved by deriving control data for performing the dummy job from the control data for performing the real build job. This measure is especially suitable for calibrating the device for the production of objects the horizontal cross section of which is the same or at least almost the same in each of the layers such as for example anti-scattering grids. It has the effect that the temperature distributions on optical parts such as mirrors, lenses, and the coupling window, that may, for example, result from a partial absorption of the laser beam, are (essentially) the same as in the real build job.

After the dummy job and before the build job for the object to be manufactured, a calibration is carried out, for example by one of the methods described in the prior art mentioned in the introductory portion of the description. Therein, the irradiation device is controlled to direct the laser beam to at least one predetermined position on a target, preferably multiple predetermined positions. At least one actual position, preferably multiple actual positions of the impingement of the laser beam on the target is or are measured. A deviation between the at least one predetermined position and the at least one actual position, or deviations between the multiple predetermined positions and the multiple actual positions is or are determined. Based on the determined deviation(s), calibration data for the production device are generated. That calibration data are then used for the real build job to correct the determined deviation(s).

Performing a calibration of a laser sintering apparatus after previously performing a dummy job as described above increases the precision of the calibration, thus enabling the laser sintering apparatus to manufacture objects having an increased accuracy in a more reliable way.

The sequence of performing the dummy job and thereafter generating calibration data may also be repeatedly carried out for different geometries of the cross-sections of the object to be produced. In that way, a plurality of sets of calibration data, each corresponding to a specific geometry of the cross sections of the object to be produced, may be generated in advance. During the production, the set of calibration data corresponding to the cross-sections of the object to be produced next is used to correct the position data in order to be able to manufacture multiple types of objects, for example of anti-scatter grids, with an improved accuracy.

Although the present invention has been described with reference to a laser sintering or laser melting apparatus, it is not restricted to laser sintering or laser melting. It may be applied to any method for the generative production of a three-dimensional object by applying and selectively solidifying a building material layer-by-layer.

The irradiation device may comprise for example one or more gas or solid state lasers or any other type of laser such as laser diodes, especially VCSEL (Vertical Cavity Surface Emitting Laser) or VECSEL (Vertical External Cavity Surface Emitting Laser), or an array of those lasers. In general, any device by which energy in form of wave or particle radiation can be selectively applied onto a layer of the building material may be used as an irradiation device. Instead of a laser, another light source, an electron beam or any other energy or radiation source which is suitable for solidifying the building material may be used, for example. Instead of the deflection of a beam, irradiation by means of a moveable row irradiator may be used. The invention may also be applied to selective mask sintering, in which, instead of a displaceable laser beam, a mask and an extended light source are used, or to high-speed sintering (HSS) wherein a material that increases (absorption sintering) or reduces (inhibition sintering) the absorption of the radiation at the corresponding positions may selectively be applied onto the building material, whereupon irradiation is unselec-tively carried out by a large-area irradiation or by means of a moveable row irradiator.

Instead of the introduction of energy, the selective solidification of the applied building material can, for example, also be achieved by other methods such as 3D printing, for example by means of the application of an adhesive. In general, the invention relates to the generative production of an object by means of a layer-by-layer application and selective solidification of a building material independently of the manner in which the building material is solidified.

Various types of powder may be used as the building material, in particular metal powders, plastic powders, ceramic powders, sand, filled or mixed powders. Not only powders may be used as the building material, but also any other suitable material.

## Claims

1. A calibration method for calibrating a production device (1) for generatively producing a three-dimensional object (2) by selectively solidifying a building material (15), preferably a powder, layer by layer, prior to a build job in which the three-dimensional object (2) is to be produced,
the production device comprising an application device (16) for applying a layer of the building material (15) and a solidification device (20) for selectively solidifying the applied layer at the positions corresponding to a cross section of the object (2) to be produced,
the production device (1) being adapted and/or controlled to repeat the steps of applying and selectively solidifying until the object (2) is completed,
the calibration method comprising:
performing a dummy job, wherein control data for performing the dummy job are derived from control data for performing the build job and wherein during the dummy job no three-dimensional object or a three-dimensional object different from the three-dimensional object (2) to be produced in the build job is built due to at least one of the following measures:
- performing the dummy job without building material (15) or with reduced building material (15) compared to the build job,
- adjusting operation of the solidification device (20) such that it does not solidify the building material (15) or solidifies the building material (15) in a different way than during the build job,
and, after the completion of the dummy job,
controlling the solidification device to act upon at least one predetermined position,
measuring at least one actual position onto which the solidification device really acts,
determining a deviation between the at least one predetermined position and the at least one actual position, and
generating calibration data for the production device based on the determined deviation.

2. The calibration method according to claim 1, wherein the object (2) to be produced is an object having an essentially constant cross section along its height, the object preferably being an anti-scatter grid.

3. The calibration method according to claim 1 or 2, wherein the dummy job is executed until steady-state operating conditions of the production device (1) are reached.

4. The calibration method according to one of claims 1 to 3, wherein
the solidification device is an irradiation device (20) emitting a radiation suitable for solidifying the building material (15), the irradiation device (20) preferably comprising a laser source (21) emitting a laser beam (22), and
parameters, preferably also parameter values, of the radiation emitted during the dummy job are the same as those to be applied for the build job.

5. The calibration method according to one of claims 1 to 4, wherein the dummy job is executed until components of the solidification device (20), in particular such components that generate and direct a solidification radiation, have reached a steady-state temperature.

6. The calibration method according to one of claims 1 to 5, wherein components of the solidification device (20) include one or more radiation source(s) (21) and/or one or more scanner(s) and/or one or more mirror(s) and/or one or more lens(es).

7. The calibration method according to one of claims 1 to 6, wherein a heater of the production device, preferably a radiation heater (17), is controlled to operate during the dummy job under the same conditions as under those of the build job.

8. The calibration method according to one of claims 1 to 7, wherein during the dummy job a gas flow is applied in the production device (1) with the same parameters and parameter values that are to be used in the build job.

9. The calibration method according to claim 8, wherein the parameters of the gas flow include a flow rate and/or a speed and/or a direction of the gas flow.

10. The calibration method according to one of claims 1 to 9, wherein the sequence of performing the dummy job and thereafter generating calibration data is repeatedly carried out for different geometries of the cross sections of the object (2) to be produced so that a plurality of sets of calibration data, each corresponding to a specific geometry of the cross sections of the object (2) to be produced, is generated.

11. A production method for generatively producing a three-dimensional object (2) by selectively solidifying a building material (15), preferably a powder, layer by layer, in a build job, the production method comprising:
applying a layer of the building material (15) by means of an application device (16),
selectively solidifying the applied layer at the positions corresponding to a cross section of the object (2) to be produced by means of a solidifying device (20), and
repeating the steps of applying and selectively solidifying until the object (2) is completed,
wherein, before the repeated execution of the steps of applying and selectively solidifying is started, a calibration method according to one of claims 1 to 10 is carried out or wherein the production method is carried out on a production device (1) comprising a control unit configured to perform a calibration method according to one of claims 1 to 10.

12. A production device (1) for generatively producing a three-dimensional object by selectively solidifying a building material (15), preferably a powder, layer by layer, the production device comprising:
an application device (16) for applying a layer of the building material (15) and
a solidification device (20) for selectively solidifying the applied layer at the positions corresponding to a cross section of the object (2) to be produced,
wherein the production device (1) is adapted and/or controlled to repeat the steps of applying and selectively solidifying until the object (2) is completed, and
wherein the production device further comprises a control unit adapted and/or controlled to perform a calibration method according to one of claims 1 to 10.

## Patentansprüche

1. Kalibrierverfahren zum Kalibrieren einer Herstellungsvorrichtung (1) zum generativen Herstellen eines dreidimensionalen Objekts (2) durch schichtweises selektives Verfestigen eines Aufbaumaterials (15), vorzugsweise eines Pulvers, vor einem Bauauftrag, bei dem das dreidimensionale Objekt (2) hergestellt werden soll,
wobei die Herstellungsvorrichtung eine Aufbringungsvorrichtung (16) zum Aufbringen einer Schicht des Aufbaumaterials (15) und eine Verfestigungsvorrichtung (20) zum selektiven Verfestigen der aufgebrachten Schicht an den Positionen, die einem Querschnitt des herzustellenden Objekts (2) entsprechen, umfasst,
wobei die Herstellungsvorrichtung (1) dafür ausgelegt und/oder gesteuert wird, die Schritte des Aufbringens und selektiven Verfestigens zu wiederholen, bis das Objekt (2) fertiggestellt ist,
wobei das Kalibrierverfahren Folgendes umfasst:
Durchführen eines Dummy-Auftrags, wobei Steuerdaten zum Durchführen des Dummy-Auftrags aus Steuerdaten zum Durchführen des Bauauftrags abgeleitet werden und wobei während des Dummy-Auftrags kein dreidimensionales Objekt oder ein dreidimensionales Objekt, das sich von dem dreidimensionalen Objekt (2), das in dem Bauauftrag hergestellt werden soll, unterscheidet, aufgrund mindestens einer der folgenden Maßnahmen gebaut wird:
- Durchführen des Dummy-Auftrags ohne Aufbaumaterial (15) oder mit reduziertem Aufbaumaterial (15) im Vergleich zu dem Bauauftrag,
- Einstellen des Betriebs der Verfestigungsvorrichtung (20) derart, dass sie das Aufbaumaterial (15) nicht verfestigt oder das Aufbaumaterial (15) auf eine andere Weise als während des Bauauftrags verfestigt,
und, nach der Fertigstellung des Dummy-Auftrags,
Steuern der Verfestigungsvorrichtung, zum Einwirken auf mindestens eine vorbestimmte Position,
Messen mindestens einer tatsächlichen Position, auf die die Verfestigungsvorrichtung tatsächlich einwirkt,
Bestimmen einer Abweichung zwischen der mindestens einen vorbestimmten Position und der mindestens einen tatsächlichen Position, und
Erzeugen von Kalibrierdaten für die Herstellungsvorrichtung basierend auf der bestimmten Abweichung.

2. Kalibrierverfahren nach Anspruch 1, wobei das herzustellende Objekt (2) ein Objekt mit einem im Wesentlichen konstanten Querschnitt entlang seiner Höhe ist, wobei das Objekt vorzugsweise ein Streustrahlenraster ist.

3. Kalibrierverfahren nach Anspruch 1 oder 2, wobei der Dummy-Auftrag ausgeführt wird, bis stationäre Betriebsbedingungen der Herstellungsvorrichtung (1) erreicht sind.

4. Kalibrierverfahren nach einem der Ansprüche 1 bis 3, wobei
die Verfestigungsvorrichtung eine Bestrahlungsvorrichtung (20) ist, die eine Strahlung emittiert, die zum Verfestigen des Aufbaumaterials (15) geeignet ist, wobei die Bestrahlungsvorrichtung (20) vorzugsweise eine Laserquelle (21) umfasst, die einen Laserstrahl (22) emittiert, und
Parameter, vorzugsweise auch Parameterwerte, der Strahlung, die während des Dummy-Auftrags emittiert wird, die gleichen sind wie diejenigen, die für den Bauauftrag anzuwenden sind.

5. Kalibrierverfahren nach einem der Ansprüche 1 bis 4, wobei der Dummy-Auftrag ausgeführt wird, bis Komponenten der Verfestigungsvorrichtung (20), insbesondere solche Komponenten, die eine Verfestigungsstrahlung erzeugen und lenken, eine stationäre Temperatur erreicht haben.

6. Kalibrierverfahren nach einem der Ansprüche 1 bis 5, wobei Komponenten der Verfestigungsvorrichtung (20) eine oder mehrere Strahlungsquelle(n) (21) und/oder einen oder mehrere Scanner(s) und/oder einen oder mehrere Spiegel(s) und/oder eine oder mehrere Linse(n) umfassen.

7. Kalibrierverfahren nach einem der Ansprüche 1 bis 6, wobei eine Heizung der Herstellungsvorrichtung, vorzugsweise eine Strahlungsheizung (17), gesteuert wird, um während des Dummy-Auftrags unter den gleichen Bedingungen wie unter denen des Bauauftrags zu arbeiten.

8. Kalibrierverfahren nach einem der Ansprüche 1 bis 7, wobei während des Dummy-Auftrags ein Gasstrom in der Herstellungsvorrichtung (1) mit den gleichen Parametern und Parameterwerten, die in dem Bauauftrag verwendet werden sollen, angewendet wird.

9. Kalibrierverfahren nach Anspruch 8, wobei die Parameter des Gasstroms eine Durchflussmenge und/oder eine Geschwindigkeit und/oder eine Richtung des Gasstroms umfassen.

10. Kalibrierverfahren nach einem der Ansprüche 1 bis 9, wobei die Reihenfolge des Durchführens des Dummy-Auftrags und des anschließenden Erzeugens von Kalibrierdaten für verschiedene Geometrien der Querschnitte des herzustellenden Objekts (2) wiederholt durchgeführt wird, so dass eine Vielzahl von Sätzen von Kalibrierdaten, die jeweils einer spezifischen Geometrie der Querschnitte des herzustellenden Objekts (2) entsprechen, erzeugt wird.

11. Herstellungsverfahren zum generativen Herstellen eines dreidimensionalen Objekts (2) durch schichtweises selektives Verfestigen eines Aufbaumaterials (15), vorzugsweise eines Pulvers, in einem Bauauftrag, wobei das Herstellungsverfahren umfasst:
Aufbringen einer Schicht des Aufbaumaterials (15) mittels einer Aufbringungsvorrichtung (16),
selektives Verfestigen der aufgebrachten Schicht an den Positionen, die einem Querschnitt des herzustellenden Objekts (2) entsprechen, mittels einer Verfestigungsvorrichtung (20), und
Wiederholen der Schritte des Aufbringens und selektiven Verfestigens, bis das Objekt (2) fertiggestellt ist,
wobei, bevor die wiederholte Ausführung der Schritte des Aufbringens und selektiven Verfestigens gestartet wird, ein Kalibrierverfahren nach einem der Ansprüche 1 bis 10 durchgeführt wird oder wobei das Herstellungsverfahren auf einer Herstellungsvorrichtung (1) durchgeführt wird, die eine Steuereinheit umfasst, die dafür ausgelegt ist, ein Kalibrierverfahren nach einem der Ansprüche 1 bis 10 durchzuführen.

12. Herstellungsvorrichtung (1) zum generativen Herstellen eines dreidimensionalen Objekts durch schichtweises selektives Verfestigen eines Aufbaumaterials (15), vorzugsweise eines Pulvers, wobei die Herstellungsvorrichtung umfasst:
eine Aufbringungsvorrichtung (16) zum Aufbringen einer Schicht des Aufbaumaterials (15) und
eine Verfestigungsvorrichtung (20) zum selektiven Verfestigen der aufgebrachten Schicht an den Positionen, die einem Querschnitt des herzustellenden Objekts (2) entsprechen,
wobei die Herstellungsvorrichtung (1) dafür ausgelegt und/oder gesteuert wird, die Schritte des Aufbringens und selektiven Verfestigens zu wiederholen, bis das Objekt (2) fertiggestellt ist, und
wobei die Herstellungsvorrichtung ferner eine Steuereinheit umfasst, die dafür ausgelegt und/oder gesteuert wird, ein Kalibrierverfahren nach einem der Ansprüche 1 bis 10 durchzuführen.

## Revendications

1. Procédé d'étalonnage pour étalonner un dispositif de production (1) pour produire de manière générative un objet tridimensionnel (2) par solidification sélective d'un matériau de construction (15), de préférence une poudre, couche par couche, avant une tâche de construction dans laquelle l'objet tridimensionnel (2) doit être produit,
le dispositif de production comprenant un dispositif d'application (16) pour appliquer une couche du matériau de construction (15) et un dispositif de solidification (20) pour solidifier sélectivement la couche appliquée aux positions correspondant à une section transversale de l'objet (2) à produire,
le dispositif de production (1) étant adapté et/ou commandé pour répéter les étapes d'application et de solidification sélective jusqu'à ce que l'objet (2) soit terminé,
le procédé d'étalonnage comprenant :
la réalisation d'une tâche fictive, dans lequel des données de commande pour réaliser la tâche fictive sont dérivées de données de commande pour réaliser la tâche de construction et dans lequel pendant la tâche fictive aucun objet tridimensionnel n'est produit ou un objet tridimensionnel différent de l'objet tridimensionnel (2) à produire dans la tâche de construction est produit en raison d'au moins l'une des mesures suivantes :
- réalisation de la tâche fictive sans matériau de construction (15) ou avec un matériau de construction (15) réduit par rapport à la tâche de construction,
- ajustement du fonctionnement du dispositif de solidification (20) de sorte qu'il ne solidifie pas le matériau de construction (15) ou solidifie le matériau de construction (15) d'une manière différente que pendant la tâche de construction,
et, après l'achèvement de la tâche fictive,
commande du dispositif de solidification pour agir sur au moins une position prédéterminée,
mesure d'au moins une position réelle sur laquelle le dispositif de solidification agit réellement,
détermination d'un écart entre l'au moins une position prédéterminée et l'au moins une position réelle, et
génération de données d'étalonnage pour le dispositif de production sur la base de l'écart déterminé.

2. Procédé d'étalonnage selon la revendication 1, dans lequel l'objet (2) à produire est un objet ayant une section transversale essentiellement constante le long de sa hauteur, l'objet étant de préférence une grille anti-diffusion.

3. Procédé d'étalonnage selon la revendication 1 ou 2, dans lequel la tâche fictive est exécutée jusqu'à ce que des conditions de fonctionnement en régime permanent du dispositif de production (1) soient atteintes.

4. Procédé d'étalonnage selon l'une des revendications 1 à 3, dans lequel
le dispositif de solidification est un dispositif d'irradiation (20) émettant un rayonnement approprié pour solidifier le matériau de construction (15), le dispositif d'irradiation (20) comprenant de préférence une source laser (21) émettant un faisceau laser (22), et
des paramètres, de préférence également des valeurs de paramètre, du rayonnement émis pendant la tâche fictive sont les mêmes que ceux à appliquer pour la tâche de construction.

5. Procédé d'étalonnage selon l'une des revendications 1 à 4, dans lequel la tâche fictive est exécutée jusqu'à ce que des composants du dispositif de solidification (20), en particulier de tels composants qui génèrent et dirigent un rayonnement de solidification, aient atteint une température en régime permanent.

6. Procédé d'étalonnage selon l'une des revendications 1 à 5, dans lequel des composants du dispositif de solidification (20) comprennent une ou plusieurs source(s) de rayonnement (21) et/ou un ou plusieurs scanner(s) et/ou un ou plusieurs miroir(s) et/ou une ou plusieurs lentille(s).

7. Procédé d'étalonnage selon l'une des revendications 1 à 6, dans lequel un dispositif de chauffage du dispositif de production, de préférence un dispositif de chauffage par rayonnement (17), est commandé pour fonctionner pendant la tâche fictive dans les mêmes conditions que celles de la tâche de construction.

8. Procédé d'étalonnage selon l'une des revendications 1 à 7, dans lequel pendant la tâche fictive un flux de gaz est appliqué dans le dispositif de production (1) avec les mêmes paramètres et valeurs de paramètre qui doivent être utilisés dans la tâche de construction.

9. Procédé d'étalonnage selon la revendication 8, dans lequel les paramètres du flux de gaz comprennent un débit et/ou une vitesse et/ou une direction du flux de gaz.

10. Procédé d'étalonnage selon l'une des revendications 1 à 9, dans lequel la séquence de réalisation de la tâche fictive et ensuite de génération de données d'étalonnage est effectuée de manière répétée pour différentes géométries des sections transversales de l'objet (2) à produire de sorte qu'une pluralité d'ensembles de données d'étalonnage, correspondant chacun à une géométrie spécifique des sections transversales de l'objet (2) à produire, soit générée.

11. Procédé de production pour produire de manière générative un objet tridimensionnel (2) par solidification sélective d'un matériau de construction (15), de préférence une poudre, couche par couche, dans une tâche de construction, le procédé de production comprenant :
l'application d'une couche du matériau de construction (15) au moyen d'un dispositif d'application (16),
la solidification sélective de la couche appliquée aux positions correspondant à une section transversale de l'objet (2) à produire au moyen d'un dispositif de solidification (20), et
la répétition des étapes d'application et de solidification sélective jusqu'à ce que l'objet (2) soit terminé,
dans lequel, avant que l'exécution répétée des étapes d'application et de solidification sélective ne soit démarrée, un procédé d'étalonnage selon l'une des revendications 1 à 10 est effectué ou dans lequel le procédé de production est effectué sur un dispositif de production (1) comprenant une unité de commande configurée pour effectuer un procédé d'étalonnage selon l'une des revendications 1 à 10.

12. Dispositif de production (1) pour produire de manière générative un objet tridimensionnel par solidification sélective d'un matériau de construction (15), de préférence une poudre, couche par couche, le dispositif de production comprenant :
un dispositif d'application (16) pour appliquer une couche du matériau de construction (15) et
un dispositif de solidification (20) pour solidifier sélectivement la couche appliquée aux positions correspondant à une section transversale de l'objet (2) à produire,
dans lequel le dispositif de production (1) est adapté et/ou commandé pour répéter les étapes d'application et de solidification sélective jusqu'à ce que l'objet (2) soit terminé, et
dans lequel le dispositif de production comprend en outre une unité de commande adaptée et/ou commandée pour effectuer un procédé d'étalonnage selon l'une des revendications 1 à 10.
